# EUROPÄISCHE PATENTSCHRIFT

(11) **EP 1 886 329 B1**
(45) Veröffentlichungstag und Bekanntmachung des Hinweises auf die Patenterteilung: **03.09.2008**
(21) Anmeldenummer: 06755283.6
(22) Anmeldetag: 23.05.2006
(51) Int. Cl.: H01H 1/42, H01R 13/187, H02B 11/12

(54) **KONTAKTANORDNUNG**
CONTACT ARRANGEMENT
SYSTEME DE CONTACT

(30) Priorität: 02.06.2005 DE 102005026388
(43) Veröffentlichungstag der Anmeldung: 13.02.2008
(73) Patentinhaber: SIEMENS AKTIENGESELLSCHAFT, 80333 München (DE)
(72) Erfinder: SCHMIDT, Mario, 04178 Leipzig (DE)
(86) Internationale Anmeldenummer: PCT/EP2006/062513
(87) Internationale Veröffentlichungsnummer: WO 2006/128801

(56) Entgegenhaltungen:
- EP-A- 0 528 503
- DE-A1- 19 509 474
- DE-B- 1 092 988
- FR-A- 1 541 812
- FR-A- 2 170 801
- US-A- 2 254 914
- US-A- 3 427 419
- US-A- 4 486 636
- US-A- 5 098 318

## Beschreibung

Die Erfindung betrifft eine Kontaktanordnung
- mit einer Kontakteinheit zum Herstellen einer elektrischen Verbindung zwischen einem ersten Kontakt, der ortsfest an einem Einschub für eine Niederspannungs-Schaltanlage angeordnet ist und einem zweiten Kontakt, der ortsfest in der Schaltanlage angeordnet ist, und
- mit einem Mittel zum Verschieben der Kontakteinheit von einer Trennstellung bis zu einer Kontaktstellung und zurück,
- bei der die Kontakteinheit zumindest ein Kontaktelement und zumindest eine das Kontaktelement federnd vorspannende Kontaktfeder aufweist.

Derartig verschiebbare Kontakteinheiten werden bei Einschüben von Niederspannungs-Schaltanlagen immer häufiger vorgesehen, um die verschiedenen Einschubstellungen bei geschlossener Schaltanlagentür realisieren zu können und um damit eine hohe Personensicherheit garantieren zu können.

Die Verschiebbarkeit der Kontaktelemente wurde dabei in der Vergangenheit beispielsweise dadurch gelöst, dass die Kontakteinheiten verschoben wurden und die Wegdifferenz zu dem ersten Kontakt durch den Einsatz von flexiblen Leitungen überbrückt wurde. Bei dieser Lösung besteht der Nachteil, dass vor allem bei größeren Strömen die flexiblen Leitungen relativ viel Platz beanspruchen. Auch müssen diese flexiblen Leitungen sorgfältig verlegt und fixiert werden, um Beschädigungen zu vermeiden.

Aus der Druckschrift DE 195 09 474 C2 eine andere derartig verschiebbare Kontaktanordnung bekannt, bei der sich eine erste Kontaktfläche des Kontaktelementes derart erstreckt, dass sie beim Verschieben der Kontakteinheit von der Trennstellung bis zur Kontaktstellung und zurück schleifend in elektrischem Kontakt mit einem der Kontakte steht, und bei der sich eine zweite Kontaktfläche des Kontaktelementes derart erstreckt, dass sie bei in Trennstellung befindlicher Kontakteinheit von dem anderen der Kontakte elektrisch getrennt ist und bei in Kontaktstellung befindlicher Kontakteinheit mit dem anderen der Kontakte in elektrischem Kontakt steht. - Bei dieser bekannten Kontaktanordnung sind ortsfest am Einschub angeordnete erste Kontakte als starre Kontaktschienen ausgebildet um neben der elektrischen Kontaktgabe auch zur mechanischen Führung mehrerer Kontakteinheiten zu dienen. Dabei weist jede der Kontakteinheiten zwei Kontaktelemente auf, die mittels Federn gegen die Kontaktschiene vorgespannt sind, wobei die Federn wippenartig an einem als Widerlager dienenden Gehäuse abgestützt sind, um die Kontaktelemente schwimmend zu lagern. Diese schwimmende Lagerung der Kontaktelemente gestattet geringfügige Toleranzabweichungen bezüglich der Einbaulage zugeordneter Strom-Sammelschienen, die die zweiten Kontakte bilden und deren Kontaktebenen parallel zu den Kontaktebenen der Kontaktschienen verlaufen.

Ausgehend von einer Kontaktanordnung nach dem Oberbegriff des Patentanspruches 1 (DE 195 09 474 C2) liegt der Erfindung die Aufgabe zu Grunde, die Kontaktanordnung derart zu gestalten, dass damit zwei Kontakte elektrisch verbindbar sind, deren Kontaktebenen senkrecht zueinander verlaufen.

Diese Aufgabe wird gemäß der Erfindung dadurch gelöst, dass die erste Kontaktfläche und die zweite Kontaktfläche des Kontaktelementes senkrecht zueinander verlaufen, wobei zusätzlich zu dem einen Kontakt, an dem das Kontaktelement schleift, zumindest ein Anschlagelement vorgesehen ist, dass eine parallel zu der zweiten Kontaktfläche verlaufende Anschlagfläche aufweist, mittels derer das Kontaktelement mechanisch geführt ist.

Bei einer derartigen Ausgestaltung, ist die Ebene, in der die zweite Kontaktfläche des Kontaktelementes verläuft im Gegensatz zu der Ebene, in der die erste Kontaktfläche verläuft, nicht durch die Lage des einen der Kontakte sondern durch die Lage der Anschlagfläche bestimmt. Der erste Kontakt trägt nicht zu dem Teil der Führung des Kontaktelementes bei, der die Ebene der zweiten Kontaktfläche bestimmt.

Eine vorteilhafte Ausgestaltung der neuen Kontaktanordnung sieht vor, dass die zumindest eine Anschlagfläche an dem Mittel zum Verschieben der Kontakteinheit ausgebildet ist.

Dabei kann die Anschlagfläche beispielsweise an einem Führungsstift ausgebildet sein, der eine Ausnehmung des Kontaktelementes durchgreift.

Vorteilhaft ist es, wenn die zumindest eine Anschlagfläche senkrecht zur zweiten Kontaktfläche verschiebbar ist. - Dadurch kann die zweite Kontaktfläche auf mechanisch einfache Weise in eine gewünschte Ebene verschoben werden. Vorteilhaft ist außerdem, dass hiermit die gesamte Kontakteinheit ohne Einfluss auf die Federvorspannung verschoben werden kann.

Eine weitere vorteilhafte Ausgestaltung der neuen Kontaktanordnung sieht vor, dass das Mittel zum Verschieben der Kontakteinheit einen Querschieber und einen das Anschlagelement bildenden Lagerkörper aufweist, wobei der Lagerkörper an dem Querschieber senkrecht zur zweiten Kontaktfläche des Kontaktelementes verschiebbar gehalten ist.
- Der Führungsstift kann dabei an dem Lagerkörper ausgebildet sein.

Zur elektrischen Verbindung mehrerer der ersten Kontakte mit mehreren der zweiten Kontakte ist vorgesehen, dass an dem Querschieber mehrere der Lagerkörper verschiebbar gehalten sind.

Eine bevorzugte Ausgestaltung der neuen Kontaktanordnung sieht vor, dass das Kontaktelement von einem flachen, U-förmigen Blech gebildet ist. - Dabei können die freien Enden des U-förmigen Bleches an den einander zugewandten Seiten einen Kontaktbuckel aufweisen. Bevorzugt ist dabei eine der Kontaktfedern als U-förmige Blattfeder ausgebildet, die die freien Enden des U-förmigen Bleches federnd gegeneinander vorspannt.

Das Anschlagelement kann auch ortsfest zu dem einen der Kontakte fixiert werden, und hierzu entsprechende Befestigungselemente aufweisen. - In diesem Fall ist das Führen des Kontaktelementes auf einfache Weise dadurch realisierbar, dass das Anschlagelement eine Führungsleiste aufweist. Zwei flache Seiten dieser Führungsleiste dienen dabei als Anschlagflächen für zumindest zwei der als Kontaktfinger ausgebildeten Kontaktelemente, wobei jeder der beiden Kontaktfinger mittels jeweils einer Feder gegen eine der Anschlagflächen vorgespannt ist.

Die aufzubringenden Kontaktierungskräfte können mit Vorteil dadurch gering gehalten werden, dass die Führungsleiste an ihrem einen Ende verjüngt ist, so dass sich entlang der Leiste bewegende, gegenüberliegende der Kontaktfinger unter der Federkraft aufeinander zu schwenken.

Bevorzugt ist das Anschlagelement als Kunststoff-Formteil ausgebildet.

In Bezug auf eine einfache Ausgestaltung und Betätigung des Mittels zum Verschieben der Kontakteinheit ist es vorteilhaft, wenn dieses am Einschub gehalten ist. - Es kann jedoch auch an einem Gerüst der Schaltanlage gehalten sein.

Im Folgenden wird die Erfindung anhand der in den Figuren 1 bis 9 dargestellten Ausführungsformen der neuen Kontaktanordnung näher erläutert. Dabei zeigen:
- Figur 1 und 2: einen Einschub für eine Niederspannungs-Schaltanlage mit einer in Trennstellung bzw. Kontaktstellung befindlichen ersten Ausführungsform der Kontaktanordnung,
- Figur 2: die erste Ausführungsform der Kontaktanordnung in Explosionsdarstellung,
- Figur 3: die erste Ausführungsform der Kontaktanordnung in ihrer Trennstellung,
- Figur 4: die erste Ausführungsform der Kontaktanordnung in ihrer Kontaktstellung,
- Figuren 5 10: bis eine zweite Ausführungsform der Kontaktanordnung in Trenn, - Zwischen bzw. Kontaktstellung.

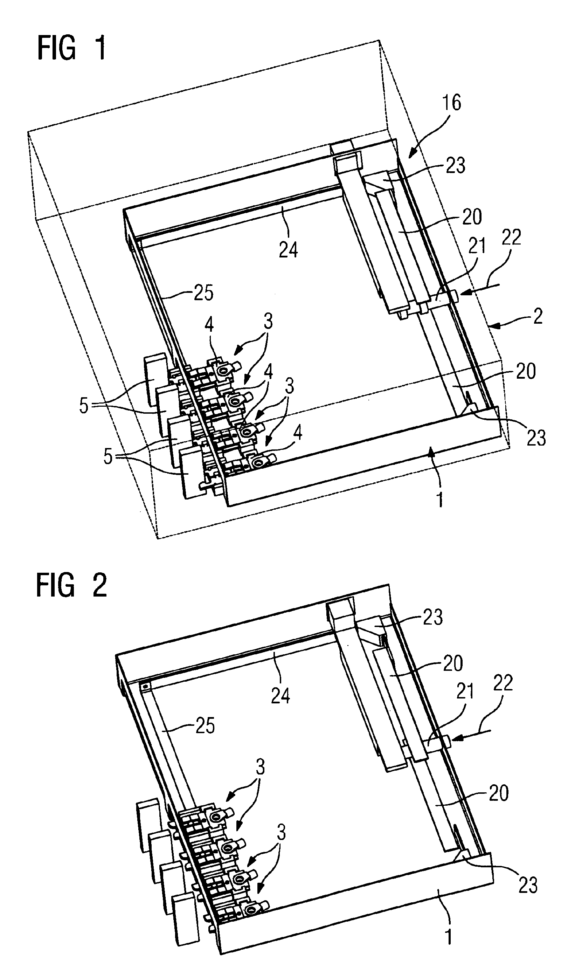

Ein in den Figuren 1 und 2 gezeigter Einschub 1 für eine Niederspannungs-Schaltanlage 2, umfasst eine erste Ausführungsform von Kontaktanordnungen 3, von denen nur vier gezeigt insgesamt jedoch acht vorgesehen sind. Die Kontaktanordnungen 3 sind in Figur 1 in Kontaktstellung und in der Figur 2 in Trennstellung gezeigt. Gemäß der Figur 1 ist in der Kontaktstellung eine elektrische Verbindung zwischen ersten Kontakten 4 - die als flache Bleche ausgebildet sind - und zweiten Kontakten 5 - die als Schienen ausgebildet sind und aus Kupfer bestehen können - hergestellt.

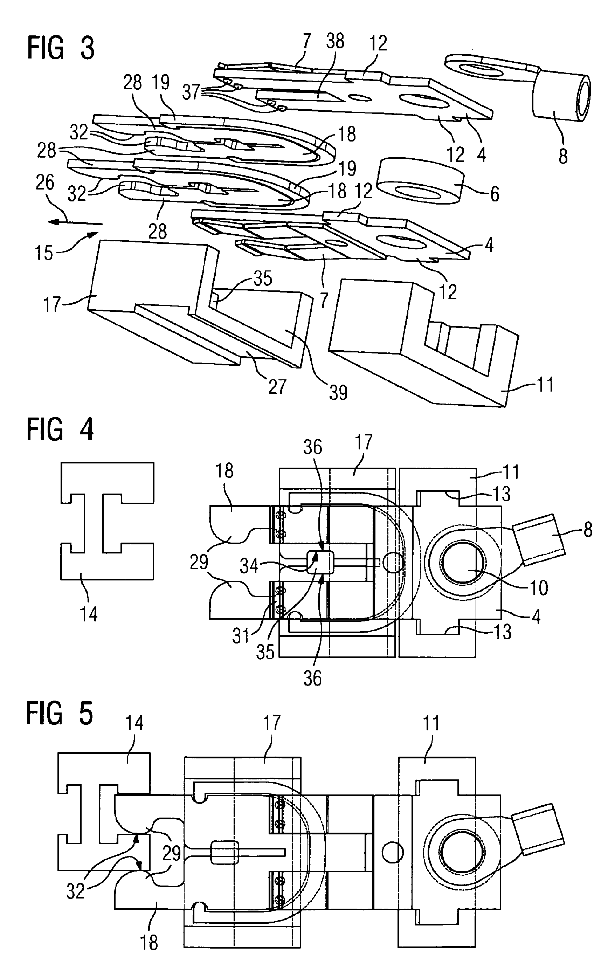

Gemäß der Figur 3 sind die beiden flachen Bleche, die die ersten Kontakte bilden, mittels einer Abstandscheibe 6 zueinander beabstandet und mittels zweier Blattfedern 7, federnd gegeneinander vorgespannt. Die mit den Blattfedern 7 versehenen flachen Bleche, die Abstandscheibe 6 und ein Kabelschuh 8 sind über eine Schraubverbindung 10 zu einer ersten mechanischen Einheit verbunden und in einem ortsfest am Einschub 1 fixierten Gehäuseteil 11 aufgenommen. Dabei weisen die flachen Bleche seitliche Vorsprünge 12 auf, die in zugeordnete Ausnehmungen 13 (vgl. Figur 4) des Gehäuseteils formschlüssig eingreifen, um die erste mechanische Einheit am Einschub zu fixieren.

Anstelle der Schiene kann als zweiter Kontakt beispielsweise auch eine Leiste 14 mit H-förmigem Querschnitt vorgesehen sein, wie sie in den Figuren 4 und 5 gezeigt ist.

Die Kontaktanordnungen 3 bestehen aus einer Kontakteinheit, die als Ganzes in der Figur 3 mit 15 bezeichnet ist, und einem Mittel zum Verschieben der Kontakteinheit, das als Ganzes in der Figur 1 mit 16 bezeichnet ist.

Die Kontakteinheit besteht aus einem Lagerkörper 17, zwei Kontaktelementen 18 und zwei Kontaktfedern 19. Dabei sind einerseits die ersten Kontakte gegenüber den Kontaktelementen 18 durch die Blattfedern 7 vorgespannt. Andererseits ist jedes der beiden Kontaktelemente durch jeweils eine der Kontaktfedern 19 gegenüber dem zweiten Kontakte 5 vorgespannt (vgl. auch Figur 3).

Wie insbesondere der Figur 1 zu entnehmen ist, weist das Mittel 16 zum Verschieben der Kontakteinheit 15 zwei vorne in dem Einschub 1 quer verlaufende Zahnstangen 20 auf, die über einen Ritzel 21 zur Seite beweglich sind. In den Ritzel 21 kann dabei über die Vorderseite mit einem Schlüssel an der Stelle des Pfeils 22 eingegriffen werden. Über Eckumlenkungen 23 werden Leisten 24 nach vorne bzw. nach hinten bewegt. Ein mit den Leisten 24 gekoppelter Querschieber 25 bewegt sich dann ebenfalls von hinten nach vorn und umgekehrt.

Die Kontakteinheit 15 ist mittels des Querschiebers 25 in ihrer Verschiebungsrichtung 26 geführt. Hierzu greift der Querschieber 25 in eine Nut 27 an der Unterseite des Lagerkörpers 17 ein, die sich quer zur Verschiebungsrichtung 26 über die gesamte Breite des Lagerkörpers 17 erstreckt. Damit ist der Lagerkörper 17 auf dem Querschieber 25 quer zur Verschiebungsrichtung 26 schwimmend gelagert.

Gemäß der Figur 3 ist jedes der Kontaktelemente 18 von einem flachen, U-förmigen, geschlitzten Blech gebildet, bei dem die Enden der beiden Schenkel 28 an den einander zugesandten Seiten jeweils einen konvex gekrümmten Kontaktbuckel 29 aufweisen, mit dem sie in der Kontaktstellung (vgl. Figur 5) an dem zweiten Kontakt 5 anliegen. Während die flachen Seiten der Bleche erste Kontaktflächen 31 bilden, die den ersten Kontakten 4 zugeordnet sind, bilden die Kanten der Kontaktbuckel 29 zweite Kontaktflächen 32, die den zweiten Kontakten 5 bzw. 14 zugeordnet sind.

Gemäß der Figur 4 sind die beiden Schenkel 28 durch die U-förmig gebogene Kontaktfeder 19, die das U-förmige Blech umgreift, federnd gegeneinander vorgespannt. Die beiden Schenkel 28 weisen jeweils eine Hinterschneidung auf, wobei die Hinterschneidungen einander derart gegenüberliegen, dass dadurch eine Aufnahmeöffnung 34 mit im Wesentlichen rechteckförmigem Querschnitt gebildet ist. Diese Aufnahmeöffnung 34 wird von einem an dem Lagerkörper 17 einstückig angeformten Führungsstift 35 formschlüssig durchgriffen, so dass das Kontaktelement 18 verdrehsicher in dem Lagerkörper 17 gehalten ist. Der Lagerkörper ist damit ein Anschlagelement, bei dem die Seitenflächen des Führungsstiftes, die parallel zu der zweiten Kontaktfläche verlaufen, Anschlagflächen 36 bilden, an dem die Kontaktelemente 18 formschlüssig anliegen und somit geführt sind.

Gemäß der Figuren 4 und 5 erstreckt sich der erste Kontakt 4 in einer Trennstellung (vgl. Figur 4) im Wesentlichen entlang der gesamten Länge der ersten Kontaktfläche 31 des Kontaktelementes 18. Dabei weisen die als flaches Blech ausgebildeten ersten Kontakte 4 an der ersten Kontaktfläche 31 zugewandten Seite jeweils zwei Kontaktnoppen 37 (vgl. Figur 3) auf, über die sie in ständigem elektrischen Kontakt mit der ersten Kontaktfläche 31 stehen. Die Kontakteinheit 15 ist von der Trennstellung - in der die Kontaktelemente 18 von den zweiten Kontakten 5 elektrisch getrennt sind - in eine in Figur 5 gezeigte Kontaktstellung - bei der die zweite Kontaktfläche 32 an den zweiten Kontakten 14 unter Federkraft anliegt und daher in elektrischem Kontakt steht - verschiebbar. Dabei weisen die ersten Kontakte 4 einen Durchlassschlitz 38 auf, der breiter als der Führungsstift 35 ist. Die ersten Kontakte 4 sind weiterhin schmaler als die lichte innere Weite 39 des Lagerkörpers 17, so dass die seitliche Führung der Kontaktelemente 18 nicht durch die Lage der ersten Kontakte 4 beeinflusst wird.

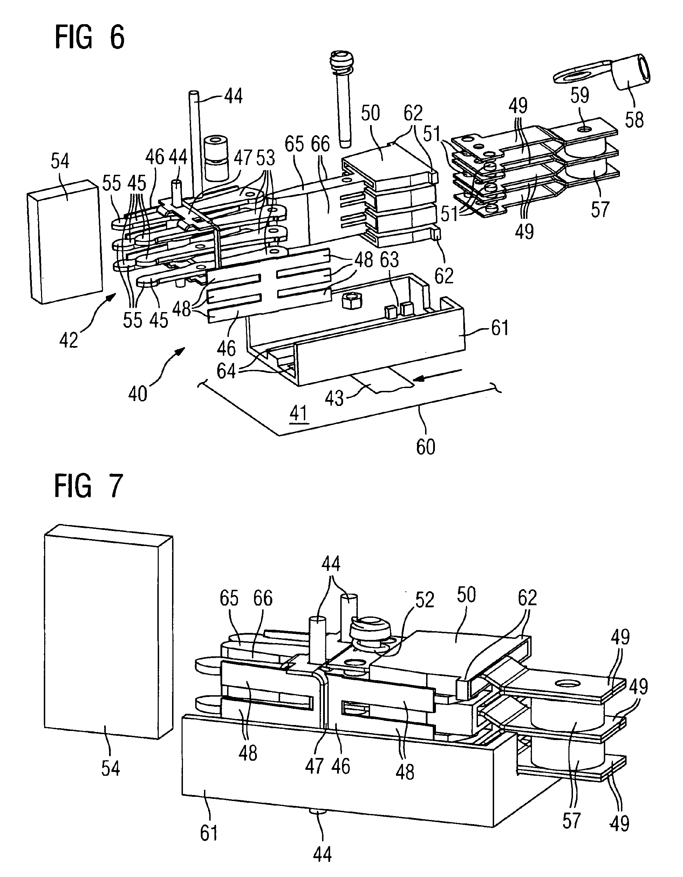

Die Figuren 6 bis 10 zeigen eine weitere Ausführungsform der neuen Kontaktanordnung.

In der Figur 6 ist die zweite Ausführungsform der neuen Kontakteinheit als Ganzes mit 40 bezeichnet, wobei jedoch von dem Mittel 41 zum Verschieben der Kontakteinheit 42 nur der Querschieber 43 gezeigt ist, da alle anderen Glieder im Wesentlichen denen der ersten Ausführungsform entsprechen. Im Gegensatz zur ersten Ausführungsform trägt der Querschieber 43 hier Zylinderstifte 44, mittels derer die Kontakteinheit 42 verschoben wird.

Die Kontakteinheit 42 besteht aus sechs Kontaktelementen 45 in Form von Kontaktfingern zwei Kontaktfedern 46 und einem Spannrahmen 47. Die beiden Kontaktfedern 46 sind dabei jeweils als Blattfeder ausgebildet und weisen an beiden Enden jeweils drei Finger 48 auf, die jeweils an einem der Kontaktfinger zugeordnet sind. Der Spannrahmen 47 umschließt die Kontaktfinger und die Blattfedern derart, dass einander gegenüberliegende der Kontaktfinger federnd gegeneinander vorgespannt sind.

Sechs erste Kontakte 49, die von flachen paarweise tulpenartig gebogenen, Blechen gebildet sind, durchgreifen fensterartige Öffnungen eines Anschlagelementes 50. Die Bleche weisen an den Kontaktfingern zugewandten Seiten jeweils zwei Kontaktnoppen 51 auf. Diese Kontaktnoppen 51 liegen von einer Trennstellung bis zu einer Kontaktstellung unter der Kraft einer Feder 52 an ersten Kontaktflächen 53 der Kontaktfinger an. Die Kontaktfinger weisen an der einem zweiten Kontakt 54 zugewandten Seite Kontaktbuckel 55 auf, deren Kanten zweite Kontaktflächen 56 der bilden.

Die Bleche, die die ersten Kontakte 49 bilden, Abstandscheiben 57 und ein Kabelschuh 58 sind gemeinsam mit dem Anschlagelement 50 über eine Schraubverbindung 59 zu einer zweiten mechanischen Einheit verbunden und in einem ortsfest am Einschub 60 fixierten Gehäuseteil 61 aufgenommen. Dabei weist das Anschlagelement 50 Befestigungselemente 62 in Form von seitlichen Vorsprüngen auf, die in zugeordnete Ausnehmungen 63 des Gehäuseteils 61 formschlüssig eingreifen, um die zweite mechanische Einheit am Einschub zu fixieren.

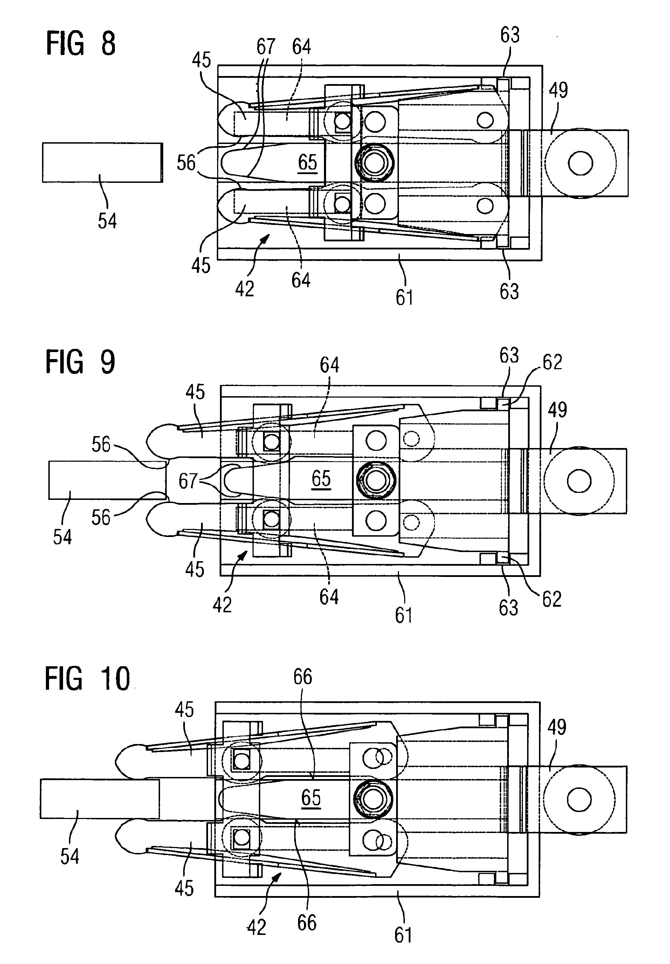

Die Kontakteinheit 42 ist von der in den Figuren 7 und 8 gezeigten Trennstellung - in der die Kontaktelemente 45 von den zweiten Kontakten 54 elektrisch getrennt sind - in eine in Figur 10 gezeigte Kontaktstellung - bei der die zweiten Kontaktflächen 56 an den zweiten Kontakten 56 unter Federkraft anliegt und daher in elektrischem Kontakt steht - verschiebbar. Dabei weist das Gehäuseteil 61 zwei Durchlassschlitze 64 für die Zylinderstifte 44 auf, die breiter als die Zylinderstifte sind. Die Zylinderstifte 44 durchgreifen zum Verschieben der Kontakteinheit 42 Durchgangsöffnungen der Kontaktelemente 45 und des Spannrahmens 47. Dabei erfolgt die seitliche Führung der Kontaktelemente 45 durch eine einstückig an dem Anschlagelement angeformte Führungsleiste 65, deren zwei flachen Seiten - die parallel zu der zweiten Kontaktfläche verlaufen - Anschlagflächen 66 für je drei der Kontaktelemente bilden. Hierbei liegen jeweils drei Kontaktelemente 45 unter der Kraft der Federn 46 an jeweils einer der Anschlagflächen 66 der Führungsleiste 65 an.

Gemäß der Figur 9, die eine Zwischenstellung der Kontakteinheit zeigt, ist die Führungsleiste 65 an ihrer dem zweiten Kontakt zugewandten Seite leicht verjüngt ausgebildet und weist zwei Abschrägungen 67 auf. Die Kontaktbuckel 56 gleiten längs dieser Abschrägungen 67, wodurch es dazu kommt, dass sich die Kontaktelemente 45 zu beiden Seiten der Führungsleiste 65 aufeinander zu bewegen, wobei sie während dieser schwenkenden Bewegung auf die zugeordneten Kontaktflächen 68 der zweiten Kontakte 54 aufgleiten, um so die in Figur 10 gezeigte Kontaktstellung zu erhalten.

Bei beiden Ausführungsformen der neuen Kontaktanordnung kann ist das Anschlagelement 17 bzw. 50 als Kunststoff-Formteil ausgebildet.

## Patentansprüche

1. Kontaktanordnung (3; 40)
- mit einer Kontakteinheit (15; 42) zum Herstellen einer elektrischen Verbindung zwischen einem ersten Kontakt (4; 49), der ortsfest an einem Einschub (1) für eine Niederspannungs-Schaltanlage (2) angeordnet ist und einem zweiten Kontakt (5; 54), der ortsfest in der Schaltanlage angeordnet ist, und
- mit einem Mittel (16; 41) zum Verschieben der Kontakteinheit von einer Trennstellung bis zu einer Kontaktstellung und zurück,
- bei der die Kontakteinheit (15; 42) zumindest ein Kontaktelement (18; 45) und zumindest eine das Kontaktelement federnd vorspannende Kontaktfeder (19; 46) aufweist,
- wobei sich eine erste Kontaktfläche (31; 53) des Kontaktelementes derart erstreckt, dass sie beim Verschieben der Kontakteinheit von der Trennstellung bis zur Kontaktstellung und zurück schleifend in elektrischem Kontakt mit einem (4; 49) der Kontakte steht, und
- wobei sich eine zweite Kontaktfläche (32; 56) des Kontaktelementes derart erstreckt, dass sie bei in Trennstellung befindlicher Kontakteinheit von dem anderen (5; 54) der Kontakte elektrisch getrennt ist und bei in Kontaktstellung befindlicher Kontakteinheit mit dem anderen der Kontakte in elektrischem Kontakt steht,
**dadurch gekennzeichnet,**
- **dass** die erste Kontaktfläche (31; 53) und die zweite Kontaktfläche (32; 56) des Kontaktelementes (18; 45) senkrecht zueinander verlaufen,
- wobei zusätzlich zu dem einen Kontakt, an dem das Kontaktelement schleift, zumindest ein Anschlagelement (17; 50) vorgesehen ist, dass eine parallel zu der zweiten Kontaktfläche (32; 56) verlaufende Anschlagfläche (36; 66) aufweist, mittels derer das Kontaktelement mechanisch geführt ist.

2. Kontaktanordnung nach Anspruch 1,
**dadurch gekennzeichnet, dass**
das die zumindest eine Anschlagfläche (36) an dem Mittel (16) zum Verschieben der Kontakteinheit (15) ausgebildet ist.

3. Kontaktanordnung nach Anspruch 2,
**dadurch gekennzeichnet, dass**
die Anschlagfläche (36) an einem Führungsstift (35) ausgebildet ist, der eine Aufnahmeöffnung (34) des Kontaktelementes (18) durchgreift.

4. Kontaktanordnung nach einem der Ansprüche 2 oder 3,
**dadurch gekennzeichnet, dass**
die zumindest eine Anschlagfläche (36) senkrecht zur zweiten Kontaktfläche (32) verschiebbar ist.

5. Kontaktanordnung nach einem der Ansprüche 1 bis 4,
**dadurch gekennzeichnet, dass**
das Mittel (16) zum Verschieben der Kontakteinheit (15) einen Querschieber (25) und einen das Anschlagelement (17) bildenden Lagerkörper aufweist, wobei der Lagerkörper an dem Querschieber (25) senkrecht zur zweiten Kontaktfläche (32) des Kontaktelementes (18) verschiebbar gehalten ist.

6. Kontaktanordnung nach Anspruch 5,
**dadurch gekennzeichnet, dass**
der Führungsstift (35) an dem Lagerkörper ausgebildet ist.

7. Kontaktanordnung nach einem der Ansprüche 5 oder 6,
**dadurch gekennzeichnet, dass**
an dem Querschieber (25) mehrere der Lagerkörper verschiebbar gehalten sind.

8. Kontaktanordnung nach einem der Ansprüche 1 bis 7,
**dadurch gekennzeichnet, dass**
das Kontaktelement (18) von einem flachen, U-förmigen Blech gebildet ist.

9. Kontaktanordnung nach Anspruch 8,
**dadurch gekennzeichnet, dass**
die freien Schenkel (28) des U-förmigen Bleches an den einander zugewandten Seiten einen Kontaktbuckel (29) aufweisen.

10. Kontaktanordnung nach einem der Ansprüche 8 oder 9,
**dadurch gekennzeichnet, dass**
die Kontaktfeder (19) als U-förmige Blattfeder ausgebildet ist, die die freien Schenkel des U-förmigen Bleches federnd gegeneinander vorgespannt.

11. Kontaktanordnung nach Anspruch 1,
**dadurch gekennzeichnet, dass**
das Anschlagelement (50) Befestigungselemente (62) aufweist mittels derer es ortsfest zu dem einen (49) der Kontakte fixierbar ist.

12. Kontaktanordnung nach Anspruch 11,
**dadurch gekennzeichnet, dass**
das Anschlagelement (50) eine Führungsleiste (65) aufweist,
wobei zwei flache Seiten der Führungsleiste als Anschlagflächen (66) für zumindest zwei der als Kontaktfinger ausgebildeten Kontaktelemente (45) dienen, und wobei jeder der beiden Kontaktfinger mittels jeweils einer Feder (46) gegen eine der Anschlagflächen (66) vorgespannt ist.

13. Kontaktanordnung nach Anspruch 12,
**dadurch gekennzeichnet, dass**
die Führungsleiste (65) an ihrem einen Ende verjüngt ist, so dass sich entlang der Leiste bewegende, gegenüberliegende der Kontaktfinger unter der Federkraft aufeinander zu schwenken.

14. Kontaktanordnung nach einem der Ansprüche 1 bis 14,
**dadurch gekennzeichnet, dass**
das Anschlagelement (17; 50) als Kunststoff-Formteil ausgebildet ist.

15. Einschub (1) für eine Niederspannungs-Schaltanlage (2) mit einer Kontaktanordnung (3; 40) zum Herstellen einer elektrischen Verbindung zwischen einem ersten Kontakt (4; 49), der ortsfest an dem Einschub angeordnet ist und einem zweiten Kontakt (5; 54), der ortsfest in der Schaltanlage angeordnet ist,
**dadurch gekennzeichnet, dass**
die Kontaktanordnung (3; 40) nach einem der Ansprüche 1 bis 14 ausgebildet ist,
wobei das Mittel (16; 41) zum Verschieben der Kontakteinheit am Einschub gehalten ist.

16. Einschub nach Anspruch 15,
**dadurch gekennzeichnet, dass**
der erste Kontakt (4; 49) als flaches Blech ausgebildet ist.

17. Einschub nach Anspruch 16,
**dadurch gekennzeichnet, dass**
das flache Blech an der dem Kontaktelement (18; 45) zugewandten Seite mit Kontaktnoppen ( 37; 51) versehen ist.

18. Einschub nach einem der Ansprüche 16 oder 17,
**dadurch gekennzeichnet, dass**
das flache Blech Vorsprünge (12) aufweist, die sich senkrecht zur Verschiebungsrichtung (26) der Kontakteineinheit (15) erstrecken und in zugeordnete Ausnehmungen (13) eines am Einschub (1) ortsfest fixierten Gehäuseteils (11) eingreifen.

19. Niederspannungs-Schaltanlage (2) mit einem Einschub (1) und mit einer Kontaktanordnung (3; 40) zum Herstellen einer elektrischen Verbindung zwischen einem ersten Kontakt (4; 49), der ortsfest an dem Einschub angeordnet ist und einem zweiten Kontakt (5; 54), der ortsfest in der Schaltanlage angeordnet ist,
**dadurch gekennzeichnet, dass**
die Kontaktanordnung (3; 40) nach einem der Ansprüche 1 bis 14 ausgebildet ist,
wobei das Mittel zum Verschieben der Kontakteinheit an einem Gerüst der Schaltanlage gehalten ist.

## Claims

1. Contact arrangement (3; 40),
- having a contact unit (15; 42) for production of an electrical connection between a first contact (4; 49), which is arranged in a fixed position on a withdrawable insert (1) for a low-voltage switchgear assembly (2), and a second contact (5; 54), which is arranged in a fixed position in the switchgear assembly, and
- having a means (16; 41) for movement of the contact unit from a disconnected position to a contact position and back,
- in which the contact unit (15; 42) has at least one contact element (18; 45) and at least one contact spring (19; 46) which prestresses the contact element in a sprung manner,
- in which a first contact surface (31; 53) of the contact element extends in such a manner that it makes a sliding electrical contact with one (4; 49) of the contacts during movement of the contact unit from the disconnected position to the contact position and back, and
- in which a second contact surface (32; 56) on the contact element extends in such a manner that it is electrically disconnected from the other (5; 54) of the contacts when the contact unit is in the disconnected position, and makes electrical contact with the other of the contacts when the contact unit is in the contact position,
**characterized**
- **in that** the first contact surface (31; 53) and the second contact surface (32; 56) of the contact element (18; 45) run at right angles to one another,
- in which, in addition to one contact on which the contact element slides, at least one stop element (17; 50) is provided, and has a stop surface (36; 66) which runs parallel to the second contact surface (32; 56), and by means of which the contact element is mechanically guided.

2. Contact arrangement according to Claim 1,
**characterized in that**
the at least one stop surface (36) is formed on the means (16) for movement of the contact unit (15).

3. Contact arrangement according to Claim 2,
**characterized in that**
the stop surface (36) is formed on a guide pin (35) which passes through a retaining opening (34) in the contact element (18).

4. Contact arrangement according to one of Claims 2 or 3,
**characterized in that**
the at least one stop surface (36) can be moved at right angles to the second contact surface (32).

5. Contact arrangement according to one of Claims 1 to 4,
**characterized in that**
the means (16) for movement of the contact unit (15) has a lateral slide (25) and a bearing body which forms the stop element (17), with the bearing body being held on the lateral slide (25) such that it can be moved at right angles to the second contact surface (32) of the contact element (18).

6. Contact arrangement according to Claim 5,
**characterized in that**
the guide pin (35) is formed on the bearing body.

7. Contact arrangement according to one of Claims 5 or 6,
**characterized in that**
a plurality of the bearing bodies are held on the lateral slide (25) such that they can move.

8. Contact arrangement according to one of Claims 1 to 7,
**characterized in that**
the contact element (18) is formed by a flat, U-shaped metal sheet.

9. Contact arrangement according to Claim 8,
**characterized in that**
the free limbs (28) of the U-shaped metal sheet have a contact bulge (29) on the mutually facing sides.

10. Contact arrangement according to one of Claims 8 or 9,
**characterized in that**
the contact spring (19) is in the form of a U-shaped leaf spring, which prestresses the free limbs of the U-shaped metal sheet against one another in a sprung manner.

11. Contact arrangement according to Claim 1,
**characterized in that**
the stop element (50) has attachment elements (62), by means of which it can be fixed in a fixed position with respect to the one (49) of the contacts.

12. Contact arrangement according to Claim 11,
**characterized in that**
the stop element (50) has a guide strip (65), with two flat faces of the guide strip being used as stop surfaces (66) for at least two of the contact elements (45) which are in the form of contact fingers, and with each of the two contact fingers being prestressed against one of the stop surfaces (66) by means of in each case one spring (46).

13. Contact arrangement according to Claim 12,
**characterized in that**
the guide strip (65) is tapered at one of its ends, such that opposite contact fingers, which move along the strip, can be pivoted towards one another by the spring force.

14. Contact arrangement according to one of Claims 1 to 14,
**characterized in that**
the stop element (17; 50) is in the form of a plastic molding

15. Withdrawable insert (1) for a low-voltage switchgear assembly (2) having a contact arrangement (3; 40) for production of an electrical connection between a first contact (4; 49), which is arranged in a fixed position on the withdrawable insert, and a second contact (5; 54), which is arranged in a fixed position in the switchgear assembly,
**characterized in that**
the contact arrangement (3; 40) is designed according to one of Claims 1 to 14,
with the means (16; 41) for movement of the contact unit being held on the withdrawable insert.

16. Withdrawable insert according to Claim 15,
**characterized in that** the first contact (4; 49) is in the form of a flat metal sheet.

17. Withdrawable insert according to Claim 16,
**characterized in that**
the flat metal sheet is provided with contact studs (37; 51) on the side facing the contact element (18; 45).

18. Withdrawable insert according to one of Claims 16 or 17,
**characterized in that**
the flat metal sheet has projections (12) which extend at right angles to the movement direction (26) of the contact unit (15) and engage in associated recesses (13) in a housing part (11) which is fixed in a fixed position on the withdrawable insert (1).

19. Low-voltage switchgear assembly (2) having a withdrawable insert (1) and having a contact arrangement (3; 40) for production of an electrical connection between a first contact (4; 49), which is arranged in a fixed position on the withdrawable insert, and a second contact (5; 54), which is arranged in a fixed position in the switchgear assembly,
**characterized in that**
the contact arrangement (3; 40) is designed according to one of Claims 1 to 14,
with the means for movement of the contact unit being held on a frame of the switchgear assembly.

## Revendications

1. Système ( 3 ; 40 ) de contact
- comprenant une première unité ( 15 ; 42 ) de contact pour ménager une liaison électrique entre un premier contact ( 4 ; 49 ), qui est disposé à poste fixe sur un tiroir ( 1 ) pour une installation ( 2 ) de distribution en basse tension et un deuxième contact ( 5 ; 54 ), qui est disposé à poste fixe dans l'installation de distribution, et
- comprenant un moyen ( 16 ; 41 ) de déplacement de l'unité de contact d'une position de séparation à une position de contact et retour,
- dans lequel l'unité ( 15 ; 42 ) de contact a au moins un élément ( 18 ; 45 ) de contact et au moins un ressort ( 19 ; 46 ) de contact mettant l'élément de contact sous précontrainte élastique,
- dans lequel une première surface ( 31 ; 53 ) de contact de l'élément de contact s'étend de manière à ce qu'elle se trouve, lors du déplacement de l'unité de contact, de la position de séparation à la position de contact et retour, en contact électrique à glissement avec l'un ( 4 ; 49 ) des contacts, et
- dans lequel une deuxième surface ( 32 ; 56 ) de contact de l'élément de contact s'étend de manière à être séparée électriquement de l'autre ( 5 ; 54 ) des contacts lorsque l'unité de contact se trouve en la position de séparation et à être en contact électrique avec l'autre des contacts lorsque l'unité de contact se trouve en la position de contact,
**caractérisé**
- **en ce que** la première surface ( 31 ; 53 ) de contact et la deuxième surface ( 32 ; 56 ) de contact de l'élément ( 18 ; 45 ) de contact s'étendent perpendiculairement l'une à l'autre,
- **en ce que** dans lequel, en plus du un contact sur lequel glisse l'élément de contact, il est prévu au moins un élément ( 17 ; 50 ) de butée qui a une surface ( 36 ; 56 ) de butée s'étendant parallèlement à la deuxième surface ( 32 ; 56 ) de contact et au moyen de laquelle l'élément de contact est guidé mécaniquement.

2. Système de contact suivant la revendication 1,
**caractérisé en ce que**
la au moins une surface ( 36 ) de butée est formée sur le moyen ( 16 ) de déplacement de l'unité ( 15 ) de contact.

3. Système de contact suivant la revendication 2,
**caractérisé en ce que**
la surface ( 36 ) de butée est formée sur une tige ( 35 ) de guidage qui passe dans une ouverture ( 34 ) de réception de l'élément ( 18 ) de contact.

4. Système de contact suivant l'une des revendications 2 ou 3,
**caractérisé en ce que**
la au moins une surface ( 36 ) de butée peut être déplacée perpendiculairement à la deuxième surface ( 32 ) de contact.

5. Système de contact suivant l'une des revendications 1 à 4,
**caractérisé en ce que**
le moyen ( 16 ) de déplacement de l'unité ( 15 ) de contact a un coulisseau ( 25 ) transversal et une pièce de palier formant l'élément ( 17 ) de butée, la pièce de palier étant maintenue sur le coulisseau ( 25 ) transversal avec possibilité de déplacement perpendiculairement à la deuxième surface ( 32 ) de contact de l'élément ( 18 ) de contact.

6. Système de contact suivant la revendication 5,
**caractérisé en ce que**
la tige ( 35 ) de guidage est formée sur la pièce de palier.

7. Système de contact suivant l'une des revendications 5 ou 6,
**caractérisé en ce que**
plusieurs des pièces de palier sont maintenues de manière à pouvoir être déplacées sur le coulisseau ( 25 ) transversal.

8. Système de contact suivant l'une des revendications 1 à 7,
**caractérisé en ce que**
l'élément ( 18 ) de contact est formé d'une tôle plate en forme de U.

9. Système de contact suivant la revendication 8,
**caractérisé en ce que**
les branches ( 28 ) libres de la tôle en forme de U ont un étrier ( 29 ) de contact sur les côtés tournés l'un vers l'autre.

10. Système de contact suivant l'une des revendications 8 ou 9,
**caractérisé en ce que**
le ressort ( 19 ) de contact est constitué sous la forme d'un ressort à lame en forme de U qui met sous précontrainte élastique l'une par rapport à l'autre les branches libres de la tôle en forme de U.

11. Système de contact suivant la revendication 1,
**caractérisé en ce que**
l'élément ( 50 ) de butée a des éléments ( 62 ) de fixation au moyen desquels il peut être immobilisé à poste fixe par rapport à l'un ( 49 ) des contacts.

12. Système de contact suivant la revendication 11,
**caractérisé en ce que**
l'élément ( 50 ) de butée a une réglette ( 65 ) de guidage, deux côtés plats de la réglette de guidage servant de surfaces ( 66 ) de butée pour au moins deux des éléments ( 45 ) de contact constitués sous la forme de doigt de contact, et chacun des deux doigts de contact étant mis sous précontrainte sur l'une des surfaces ( 66 ) de butée au moyen, respectivement, d'un ressort ( 46 ).

13. Système de contact suivant la revendication 12,
**caractérisé en ce que**
la réglette ( 65 ) de guidage se rétrécit à l'une de ses extrémités, de sorte que les doigts de contact opposés se déplaçant le long de la réglette basculent l'un sur l'autre sous la force du ressort.

14. Système de contact suivant l'une des revendications 1 à 13,
**caractérisé en ce que**
l'élément ( 17 ; 50 ) de butée est constitué sous la forme d'une pièce moulée en matière plastique.

15. Tiroir ( 1 ) pour une installation ( 2 ) de distribution en basse tension ayant un système ( 3 ; 40 ) de contact pour ménager une liaison électrique entre un premier contact ( 4 ; 49 ), qui est disposé à poste fixe sur le tiroir, et un deuxième contact ( 5 ; 54 ) qui est disposé à poste fixe dans l'installation de distribution,
**caractérisé en ce que** le système ( 3 ; 40 ) de contact est constitué suivant l'une des revendications 1 à 14,
le moyen ( 16 ; 41 ) de déplacement de l'unité de contact étant maintenu sur le tiroir.

16. Tiroir suivant la revendication 15,
**caractérisé en ce que**
le premier contact ( 4 ; 49 ) est constitué sous la forme d'une tôle plate.

17. Tiroir suivant la revendication 16,
**caractérisé en ce que**
la tôle plate est munie de bossages ( 37 ; 51 ) de contact du côté tourné vers l'élément ( 18 ; 485 ) de contact.

18. Tiroir suivant l'une des revendications 16 ou 17,
**caractérisé en ce que**
la tôle plate a des saillies ( 12 ) qui s'étendent perpendiculairement à la direction ( 26 ) de déplacement de l'unité ( 15 ) de contact et qui pénètrent dans des évidements ( 13 ) associés d'une partie ( 11 ) de boîtier immobilisée à poste fixe sur le tiroir ( 1 ).

19. Installation ( 2 ) de distribution en basse tension, comprenant un tiroir ( 1 ) et un système ( 3 ; 40 ) de contact pour ménager une liaison électrique entre un premier contact ( 4 ; 49 ) qui est disposé à poste fixe sur le tiroir et un deuxième contact ( 5 ; 54 ) qui est disposé à poste fixe dans l'installation de distribution,
**caractérisée en ce que**
le système ( 3 ; 40 ) de contact est constitué suivant l'une des revendications 1 à 14,
le moyen de déplacement de l'unité de contact étant maintenu sur un bâti de l'installation de distribution.
